# EUROPÄISCHE PATENTANMELDUNG

(11) **EP 0 808 980 A2**
(43) Veröffentlichungstag der Anmeldung: **26.11.1997**
(21) Anmeldenummer: 97106784.8
(22) Anmeldetag: 24.04.1997
(51) Int. Cl.: E05B 65/36

(54) **Zentralverriegelungsvorrichtung für Fahrzeuge**

(30) Priorität: 23.05.1996 DE 19620873; 17.07.1996 DE 19628878
(71) Anmelder: Bayerische Motoren Werke Aktiengesellschaft, 80788 München (DE)
(72) Erfinder: Dietl, Max, 94315 Straubing (DE); Grünberger, Werner, 82319 Starnberg (DE)

(57) **Zusammenfassung**

Bei einem Fahrzeug, mit einem Steuergerät für eine Zentralverriegelungsvorrichtung und mehreren davon gesteuerten Verriegelungseinrichtungen/Entriegelungseinrichtungen (i.f. VEEs) für Türen und Klappen und mit einer Brennkraftmaschine, ist die VEE der Tankklappe unabhängig von den übrigen VEEs durch das Steuergerät schaltbar ist; die Brennkraftmaschine kann bei geöffnetem Tankdeckel und/oder Tankverschluß nicht in Betrieb genommen werden.

## Beschreibung

Die Erfindung bezieht sich auf ein Fahrzeug mit den Merkmalen des Oberbegriffs von Patentanspruch 1.

In verschiedenen Staaten ist es zwar verboten, das Fahrzeug bei Betrieb des Antriebsaggregats, beispielsweise einer Brennkraftmaschine, zu betanken. Dennoch geschieht dies häufig aus Unkenntnis der Gesetzeslage. Bedingt durch den gleichzeitigen Betrieb sämtlicher VEEs durch das Steuergerät im selben Sinne, d.h. gemeinsam im Entriegelungs- bzw. im Verriegelungssinne ist es nicht möglich, die Betankung des Fahrzeugs nur dann zu ermöglichen, wenn dies mit den gesetzlichen Bestimmungen verträglich ist. Die bei Zentralverriegelungsvorrichtungen vorgesehene Möglichkeit, nur die VEE einer Fahrzeugtür, i.d.R. der Fahrzeugtür des Fahrers unabhängig von den VEEs der anderen Türen und Klappen zu steuern, bietet ebenfalls keinen Schutz vor einer Betankung des Fahrzeugs dann, wenn es nicht erlaubt ist, da die Entkopplung der VEE der einen Tür unabhängig vom Betrieb des Fahrzeugs vorgenommen wird.

Andererseits kann es auch vorkommen, daß das Fahrzeug nach dem Tanken wieder in Betrieb genommen wird, obwohl der Tankverschluß nicht geschlossen ist. Die Folge davon kann beispielsweise eine Beschädigung der Tankanlage und/oder des Fahrzeugs beim Wegfahren mit noch mit dem Fahrzeug verbundener Tankeinrichtung sein.

Der Erfindung liegt die Aufgabe zugrunde, eine Zentralverriegelungsvorrichtung der eingangs genannten Art zu schaffen, bei der das Betanken und der Betrieb des Fahrzeugs nur unabhängig voneinander möglich ist.

Die Erfindung löst diese Aufgabe durch die kennzeichnenden Merkmale des Patentanspruchs 1.

Einerseits wird ein unberechtigtes Betanken des Fahrzeugs verhindert. Durch das Entkoppeln der VEE der Tankklappe von den VEEs der übrigen Türen und Klappen besteht die Möglichkeit, dem Fahrer zunächst das Betanken und einen möglichen Gesetzesverstoß bewußt zu machen. Es ist beispielsweise möglich, die VEE der Tankklappe stets verriegelt zu halten und das Entriegeln von einem gesonderten Befehl, beispielsweise mit Hilfe eines Tastschalters abhängig zu machen.

Um nun ein dann noch mögliches unberechtigtes Betanken des Fahrzeugs sicher auszuschließen, kann die Entriegelung der VEE der Tankklappe mit dem Betrieb des Fahrzeugs gekoppelt sein. Es kann beispielsweise die VEE der Tankklappe nur dann entriegelt werden, wenn das Fahrzeug durch Unterbrechen des Hauptstromkreises abgeschaltet ist. Dies kann beispielsweise durch Überwachung der Stellung des Zündschlüssels erfolgen. Befindet sich dieser im Zündschloß, so bleibt die VEE der Tankklappe verriegelt.

Eine damit evtl. verbundene Komforteinbuße läßt sich vermeiden, wenn die Verriegelung an den Betrieb des Antriebsaggregats gekoppelt ist. Wird der Betrieb des Antriebsaggregats, beispielsweise der Brennkraftmaschine unterbrochen, beispielsweise durch Unterbrechen des Zündstromkreises, so kann die VEE durch das Steuergerät selbsttätig in die Entriegelungsstellung gebracht werden. Es ist dann möglich, bei ausgeschaltetem Antriebsaggregat das Fahrzeug zu betanken. Hierzu ist es nicht erforderlich, den Zündschlüssel vom Zündschloß zu entfernen. Eine derartige Maßnahme stellt keinerlei Komforteinbuße für den Fahrzeugbenutzer dar. Andererseits wird durch den Bezug zum Betrieb des Antriebsaggregats sichergestellt, daß das Fahrzeug nur betankt wird, wenn das Antriebsaggregat abgeschaltet ist. Damit kann auch eine Feuergefahr, wie sie bei Betanken des Fahrzeugs mit laufendem Antriebsaggregat besteht, sicher vermieden werden.

Andererseits wird der Zusammenhang zwischen dem Betrieb der Brennkraftmaschine und dem Öffnungs- bzw. Schließzustand des Tankdeckels bzw. Tankverschlusses in der Weise erweitert, als auch dafür Sorge getragen wird, daß das Fahrzeug bei nicht ordnungsgemäß verschlossenem Tankdeckel bzw. Tankverschluß nicht in Betrieb genommen werden kann.

Damit wird ein Wegfahren nach Abschluß des Tankvorgangs bei geöffnetem Tankverschluß bzw. nicht ordnungsgemäß aufgesetztem Tankdeckel ebenso verhindert wie das Wegfahren bei noch in den Tankstutzen eingesteckter Zapfpistole. Damit wird nicht nur der Gesetzeslage Rechnung getragen, sondern auch die Unfallgefahr im Bereich der Tankstellen deutlich reduziert. Auch ist es nicht mehr möglich, den Tankdeckel zu verlieren, wenn er beispielsweise nach dem Tanken nicht ordnungsgemäß wieder aufgeschraubt wurde. Auch eine Umweltverschmutzung durch Kraftstoffverlust aus dem geöffneten Tank ist dann ausgeschlossen.

Die Information über den nicht ordnungsgemäß geschlossenen Tankdeckel bzw. Tankverschluß kann auf verschiedene Weise geliefert werden. So ist es möglich, beispielsweise mit Hilfe eines Näherungsschalters oder einer auf optischer Basis arbeitenden Sensorik den Zustand bzw. die Lage des Tankdeckels bzw. des Tankverschlusses zu erkennen.

Demgegenüber ergibt sich eine deutliche Vereinfachung des konstruktiven Aufwands, wenn ein Kontaktschalter im Tankdeckel bzw. im Tankverschluß ein Signal an eine Steuereinheit der Brennkraftmaschine liefert. Dieses Signal kann beispielsweise solange anliegen, wie der Tankdeckel ordnungsgemäß geschlossen ist bzw. dann, wenn der Tankdeckel gerade geöffnet ist bzw. der Tankverschluß abgenommen ist.

Auch ist es grundsätzlich möglich, das Signal, wie an sich bekannt, im Rahmen einer Zentralverriegelungseinrichtung abzunehmen. Über diese Einrichtung wird die Verriegelung und Entriegelung beispielsweise des Tankdeckels gesteuert. Das in diesem Zusammenhang anstehende Signal kann im Rahmen der vorliegenden Erfindung dazu verwendet werden, gegebenenfalls die Wieder-Inbetriebnahme der Brennkraftmaschine zu verhindern, sofern der Tankdeckel bzw. der Tankverschluß nicht ordnungsgemäß sitzen.

## Patentansprüche

1. Fahrzeug, mit einem Steuergerät für eine Zentralverriegelungsvorrichtung und mehreren davon gesteuerten Verriegelungseinrichtungen/Entriegelungseinrichtungen (i.f. VEEs) für Türen und Klappen und mit einer Brennkraftmaschine, dadurch gekennzeichnet, daß die VEE der Tankklappe unabhängig von den übrigen VEEs durch das Steuergerät schaltbar ist und daß die Brennkraftmaschine bei geöffnetem Tankdeckel und/oder Tankverschluß nicht in Betrieb genommen werden kann.

2. Fahrzeug nach Anspruch 1, dadurch gekennzeichnet, daß die VEE der Tankklappe bei Betrieb des Fahrzeugs und/oder der Brennkraftmaschine selbsttätig durch das Steuergerät in den verriegelten Zustand schaltbar ist.

3. Fahrzeug nach Anspruch 2, dadurch gekennzeichnet, daß der laufende Betrieb durch ein mit dem Betrieb des Antriebsaggregats verbundenes Signal erkennbar ist.

4. Fahrzeug nach einem der vorhergehenden Ansprüche, gekennzeichnet, durch einen im Tankdeckel und/oder im Tankverschluß angeordneten Kontaktschalter, der ein Signal an eine Steuerungsvorrichtung der Brennkraftmaschine liefert.

5. Fahrzeug nach einem der vorhergehenden Ansprüche, dadurch gekennzeichnet, daß das Signal im Rahmen einer Zentralverriegelungseinrichtung verwendet wird.
